# EUROPÄISCHE PATENTSCHRIFT

(11) **EP 4 275 979 B1**
(45) Veröffentlichungstag und Bekanntmachung des Hinweises auf die Patenterteilung: **07.05.2025**
(21) Anmeldenummer: 23159648.7
(22) Anmeldetag: 02.03.2023
(51) Int. Cl.: B60W 40/09, B60W 50/14

(54) **VERFAHREN UND VORRICHTUNG ZUR UNTERSTÜTZUNG EINES FAHRERS EINES KRAFTFAHRZEUGS BEI EINEM DEAKTIVIERTEN ABSTANDS- UND GESCHWINDIGKEITSREGELUNGSSYSTEM**
METHOD AND DEVICE FOR ASSISTING A DRIVER OF A MOTOR VEHICLE WHEN A DISTANCE AND SPEED CONTROL SYSTEM IS DISABLED
PROCÉDÉ ET DISPOSITIF D'ASSISTANCE AU CONDUCTEUR D'UN VÉHICULE AUTOMOBILE DANS UN SYSTÈME DE RÉGULATION DÉSACTIVÉ DE LA DISTANCE ET DE LA VITESSE

(30) Priorität: 12.05.2022 DE 102022204650
(43) Veröffentlichungstag der Anmeldung: 15.11.2023
(73) Patentinhaber: Robert Bosch GmbH, 70442 Stuttgart (DE)
(72) Erfinder: Huebner, David, 70806 Kornwestheim (DE)

(56) Entgegenhaltungen:
- WO-A1-2018/156425
- US-A1- 2016 090 090
- US-A1- 2021 221 368
- US-B1- 10 832 261

## Beschreibung

### Stand der Technik

Aus der DE 10 2020 207 502 A1 ist ein Verfahren zum Betreiben eines einspurigen oder mehrspurigen Fahrzeugs mit einem Fahrerassistenzsystem bekannt, wobei eine Geschwindigkeit des Fahrzeugs und ein Abstand des Fahrzeugs zu einem vorausfahrenden Fahrzeug geregelt werden, wobei die Geschwindigkeit innerhalb eines systembedingten Geschwindigkeitsbereichs des Fahrerassistenzsystems unter Verwendung einer Stellung eines Bedienelements des Fahrzeugs geregelt wird und bis zu einer innerhalb des Geschwindigkeitsbereichs wählbaren optionalen Zielgeschwindigkeit geregelt wird, wobei vor einem Überschreiten einer Obergrenze des Geschwindigkeitsbereichs ein Warnsignal für einen Fahrer des Fahrzeugs bereitgestellt wird und wobei der Abstand innerhalb des Geschwindigkeitsbereichs in einem geschwindigkeitsabhängigen Abstandspufferbereich in Abhängigkeit von
der Stellung geregelt wird.

### Offenbarung der Erfindung

Die Erfindung betrifft ein Verfahren zur Unterstützung eines Fahrers eines Kraftfahrzeugs bei einem deaktivierten Abstands- und Geschwindigkeitsregelungssystem, bei dem
- mittels einer am Kraftfahrzeug angebrachten vorausschauenden Umfeldsensorik der Abstand zu einem vor dem Kraftfahrzeug sich befindenden Objekt detektiert wird und
- abhängig vom Abstand und der momentanen Geschwindigkeit des einspurigen Kraftfahrzeugs eine Fahrerinformation ausgegeben wird.

Bei der Umfeldsensorik handelt es sich insbesondere um eine Radarsensorik, welche zu einem Abstands- und Geschwindigkeitsregelungssystem gehört und dessen Regelung beeinflusst.

Eine vorteilhafte Ausgestaltung der Erfindung ist dadurch gekennzeichnet, dass abhängig von der momentanen Geschwindigkeit des Kraftfahrzeugs ein Mindestabstand zu dem sich vor dem Kraftfahrzeug befindenden Objekt ermittelt wird und dass die Fahrerinformation dann ausgegeben wird, wenn der Abstand den Mindestabstand unterschreitet. Bei dem Objekt handelt es sich insbesondere um das unmittelbar vorausfahrende Fahrzeug.

Eine vorteilhafte Ausgestaltung der Erfindung ist dadurch gekennzeichnet, dass die Fahrerinformation nach Beendigung der Fahrt ausgegeben wird.

Die Erfindung ist dadurch gekennzeichnet, dass die Fahrerinformation dann ausgeben wird, wenn während der Fahrt die Anzahl der Ereignisse, bei denen der Abstand den Mindestabstand unterschritten hat, einen vorgegebenen Grenzwert erreicht oder überschritten hat.

Eine vorteilhafte Ausgestaltung der Erfindung ist dadurch gekennzeichnet, dass die Fahrerinformation einen Hinweis umfasst, den Abstand zu vergrößern und/oder die Geschwindigkeit zu verringern.

Eine vorteilhafte Ausgestaltung der Erfindung ist dadurch gekennzeichnet, dass zusätzlich die Relativgeschwindigkeit zwischen dem Kraftfahrzeug und sich dem vor dem Kraftfahrzeug sich befindenden Objekt detektiert wird und abhängig davon eine weitere Fahrerinformation ausgegeben wird.

Eine vorteilhafte Ausgestaltung der Erfindung ist dadurch gekennzeichnet, dass die weitere Fahrerinformation dann ausgegeben wird, wenn bei der Relativgeschwindigkeit während einer Fahrt oder während eines Zeitintervalls vorgegebener Dauer eine vorgegebene Anzahl von Überschreitungen eines Grenzwerts erreicht wird.

Eine vorteilhafte Ausgestaltung der Erfindung ist dadurch gekennzeichnet, dass die weitere Fahrerinformation eine Pausenempfehlung und/oder den Hinweis, rascher auf vorausfahrende langsamere Fahrzeuge zu reagieren umfasst.

Eine vorteilhafte Ausgestaltung der Erfindung ist dadurch gekennzeichnet, dass es sich bei dem Kraftfahrzeug um ein einspuriges Kraftfahrzeug handelt.

Eine vorteilhafte Ausgestaltung der Erfindung ist dadurch gekennzeichnet, dass es sich bei dem einspurigen Kraftfahrzeug um ein Motorrad handelt.

Weiter umfasst die Erfindung eine Vorrichtung, enthaltend Mittel, die zur Durchführung der erfindungsgemäßen Verfahren ausgestaltet sind. Dabei handelt es sich insbesondere um ein Steuergerät, in welchem der Programmcode zur Durchführung der erfindungsgemäßen Verfahren hinterlegt ist.

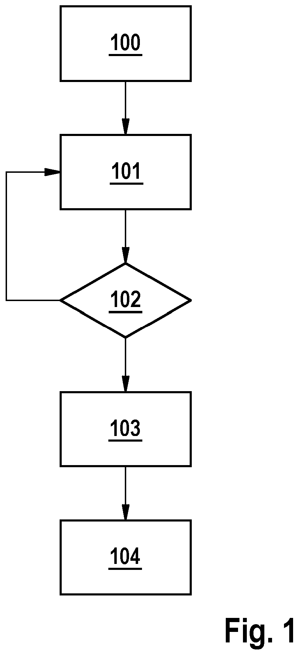

Die Zeichnung umfasst Figur 1.

In Fig. 1 ist der grundlegende Ablauf einer Ausgestaltung des erfindungsgemäßen Verfahrens dargestellt.

Eine Möglichkeit zur Erhöhung der Sicherheit von Motorradfahrern besteht darin, die Signale der Sensoren eines Abstands- und/oder Geschwindigkeitsregelungssystems auch bei einem deaktiviertem eines Abstands- und/oder Geschwindigkeitsregelungssystem weiter zu verwenden.

Im Straßenverkehr sind einzuhaltende Mindestabstände vorgeschrieben. Diese sollen sicherstellen, dass im Falle von unerwartet auftretenden Verkehrshindernissen noch ausreichend Raum und Zeit gewährleistet ist, um eine Kollision zu verhindern oder zumindest die Aufprallintensität zu schwächen. Der Mindestabstand richtet sich dabei nach der gefahrenen Geschwindigkeit. Allgemein gilt, dass mit zunehmender Geschwindigkeit ein größerer Abstand zum vorausfahrenden Fahrzeug vorhanden sein muss.

Abstands- und/oder Geschwindigkeitsregelungssysteme weisen üblicherweise eine Umfeldsensorik, z.B. eine Radarsensorik, auf, welche den Abstand und die Relativgeschwindigkeit zu einem vorausfahrenden Vorderfahrzeug bzw. zu einem sich vor dem Fahrzeug befindlichen Objekt ermitteln.

Auch bei einem deaktivierten Abstands- und/oder Geschwindigkeitsregelungssystem können diese Informationen ausgewertet und z.B. grafisch auf einem Display z.B. im Kombiinstrument dargestellt werden.

Wird der Mindestabstand beispielsweise häufig unterschritten, dann kann im Kombiinstrument eine Fahrerwarnung mit der Aufforderung, den Abstand zu vergrößern, ausgegeben werden. Weiter ist es denkbar, nach abgeschlossener Fahrt bei stehendem Fahrzeug eine Auswertung zum Fahrverhalten während der Fahrt anzuzeigen. Dies kann z.B. eine optische Anzeige "Abstand mehrfach zu gering" sowie "Empfehlung: Halten Sie mehr Abstand, um ihre Sicherheit zu erhöhen" sein.

Die Informationen zur Relativgeschwindigkeit können ebenfalls mit einbezogen werden. Hohe Relativgeschwindigkeiten und damit verbundene schnelle Annäherung an langsamere Fahrzeuge sind ein Indikator für eine hektische oder risikoreiche oder unaufmerksame Fahrzeugführung. Hier sind bei der Auswertung ebenfalls eine Warnmeldung und eine Pausenempfehlung für den Fahrer denkbar, beispielsweise verbunden mit den Informationen "Häufiges Auflaufen auf langsamere Fahrzeuge" und "Empfehlung: Versuchen Sie schneller auf langsamere Fahrzeuge zu reagieren, um ihre Sicherheit zu erhöhen".

In Fig. 1 ist der grundlegende Ablauf einer Ausgestaltung des erfindungsgemäßen Verfahrens dargestellt.

Nach dem Start des Verfahrens in Block 100 wird in Block 101 mittels einer am Kraftfahrzeug angebrachten vorausschauenden Umfeldsensorik der Abstand zu einem sich vor dem Kraftfahrzeug befindenden Objekt, insbesondere einem vorausfahrenden Kraftfahrzeug, detektiert. In Block 102 wird dieser Abstand mit einem Mindestabstand verglichen. Ist der Abstand größer als der Mindestabstand, dann wird zu Block 101 zurückgekehrt. Ist der Abstand jedoch kleiner als der Mindestabstand, dann wird in Block 103 entweder sofort oder nach Beendigung der Fahrt eine Fahrerinformation ausgegeben. In Block 104 endet das Verfahren.

## Patentansprüche

1. Verfahren zur Unterstützung eines Fahrers eines einspurigen Kraftfahrzeugs bei einem deaktivierten Abstands- und Geschwindigkeitsregelungssystem, bei dem
- mittels einer am einspurigen Kraftfahrzeug angebrachten vorausschauenden Umfeldsensorik der Abstand zu einem vor dem Kraftfahrzeug sich befindenden Objekt detektiert wird (101) und
- abhängig vom Abstand und der momentanen Geschwindigkeit des einspurigen Kraftfahrzeugs eine Fahrerinformation ausgegeben wird (103),**dadurch gekennzeichnet, dass**
die Fahrerinformation dann ausgeben wird, wenn während der Fahrt die Anzahl der Ereignisse, bei denen der Abstand einen Mindestabstand unterschritten hat,
einen vorgegebenen Grenzwert erreicht oder überschritten hat (103).

2. Verfahren nach Anspruch 1, **dadurch gekennzeichnet, dass** der Mindestabstand abhängig von der momentanen Geschwindigkeit des Kraftfahrzeugs ermittelt wird.

3. Verfahren nach einem der vorhergehenden Ansprüche, **dadurch gekennzeichnet, dass** die Fahrerinformation einen Hinweis umfasst, den Abstand zu vergrößern und/oder die Geschwindigkeit zu verringern.

4. Verfahren nach einem der vorhergehenden Ansprüche, **dadurch gekennzeichnet, dass** zusätzlich die Relativgeschwindigkeit zwischen dem Kraftfahrzeug und sich dem vor dem Kraftfahrzeug sich befindenden Objekt detektiert wird und abhängig davon eine weitere Fahrerinformation ausgegeben wird.

5. Verfahren nach Anspruch 4, **dadurch gekennzeichnet, dass** die weitere Fahrerinformation dann ausgegeben wird, wenn bei der Relativgeschwindigkeit während einer Fahrt oder während eines Zeitintervalls vorgegebener Dauer eine vorgegebene Anzahl von Überschreitungen eines Grenzwerts erreicht wird.

6. Verfahren nach Anspruch 4 oder 5, **dadurch gekennzeichnet, dass** die weitere Fahrerinformation eine Pausenempfehlung und/oder den Hinweis, rascher auf vorausfahrende langsamere Fahrzeuge zu reagieren umfasst.

7. Verfahren nach einem der vorhergehenden Ansprüche, **dadurch gekennzeichnet, dass** nach abgeschlossener Fahrt bei stehendem Fahrzeug eine Auswertung zum Fahrverhalten während der Fahrt angezeigt wird.

8. Verfahren nach Anspruch 1, **dadurch gekennzeichnet, dass** es sich bei dem einspurigen Kraftfahrzeug um ein Motorrad handelt.

9. Vorrichtung, enthaltend Mittel, die zur Durchführung der erfindungsgemäßen Verfahren ausgestaltet sind.

## Claims

1. Method for assisting a rider of a single-track motor vehicle with a deactivated distance and speed control system, in which
- the distance from an object located ahead of the motor vehicle is detected (101) by means of a forward-looking environment sensor system attached to the single-track motor vehicle and
- depending on the distance and the momentary speed of the single-track motor vehicle, rider information is output (103), **characterized in that**
the rider information is output if, during the journey, the number of events in which the distance went below a minimum distance has reached or exceeded a predetermined limit value (103).

2. Method according to Claim 1, **characterized in that** the minimum distance is determined depending on the momentary speed of the motor vehicle.

3. Method according to one of the preceding claims, **characterized in that** the rider information includes a warning to increase the distance and/or to reduce the speed.

4. Method according to one of the preceding claims, **characterized in that**, in addition, the relative speed between the motor vehicle and the object located ahead of the motor vehicle is detected and, depending on this, further rider information is output.

5. Method according to Claim 4, **characterized in that** the further rider information is output if, at the relative speed, a predetermined number of exceed-ances of a limit value is reached during a journey or during a time interval of a predetermined duration.

6. Method according to Claim 4 or 5, **characterized in that** the further rider information includes a recommendation to take a break and/or the warning to react more quickly to slower vehicles travelling ahead.

7. Method according to one of the preceding claims, **characterized in that**, once a journey has been completed, an evaluation of the riding behaviour during the journey is displayed while the vehicle is stationary.

8. Method according to Claim 1, **characterized in that** the single-track motor vehicle is a motorcycle.

9. Device including means which are designed for carrying out the methods according to the invention.

## Revendications

1. Procédé pour assister le conducteur d'un véhicule monodirectionnel lorsque le système de régulation de distance et de vitesse est désactivé, dans lequel
- la distance par rapport à un objet se trouvant devant le véhicule est détectée (101) au moyen d'un système de capteurs d'environnement prédictif monté sur le véhicule monodirectionnel, et
- une information destinée au conducteur est émise (103) en fonction de la distance et de la vitesse instantanée du véhicule monodirectionnel, **caractérisé en ce que**
l'information destinée au conducteur est émise lorsque, pendant le trajet, le nombre d'événements au cours desquels la distance est tombée en dessous d'une distance minimale a atteint ou dépassé une valeur limite prédéfinie (103).

2. Procédé selon la revendication 1, **caractérisé en ce que** la distance minimale est déterminée en fonction de la vitesse instantanée du véhicule.

3. Procédé selon l'une des revendications précédentes, **caractérisé en ce que** l'information destinée au conducteur comprend une indication d'augmenter la distance et/ou de réduire la vitesse.

4. Procédé selon l'une des revendications précédentes, **caractérisé en ce que** la vitesse relative entre le véhicule et l'objet se trouvant devant le véhicule est également détectée, et, en fonction de celle-ci, une information supplémentaire est fournie au conducteur.

5. Procédé selon la revendication 4, **caractérisé en ce que** l'information supplémentaire destinée au conducteur est émise lorsque la vitesse relative pendant un trajet ou pendant un intervalle de temps d'une durée prédéfinie atteint un nombre prédéfini de dépassements d'une valeur limite.

6. Procédé selon la revendication 4 ou la revendication 5, **caractérisé en ce que** l'information supplémentaire destinée au conducteur comprend une recommandation de faire une pause et/ou l'indication de réagir plus rapidement aux véhicules plus lents qui précèdent.

7. Procédé selon l'une des revendications précédentes, **caractérisé en ce qu'**une évaluation du comportement de conduite pendant le trajet est affichée une fois le trajet terminé, le véhicule étant à l'arrêt.

8. Procédé selon la revendication 1, **caractérisé en ce que** le véhicule à moteur monodirectionnel est une moto.

9. Dispositif contenant des moyens conçus pour la mise en œuvre du procédé selon l'invention.
